Europäisches Patentamt

European Patent Office

Office européen des brevets

(11) Veröffentlichungsnummer: **0 151 228**
B1

(12) **EUROPÄISCHE PATENTSCHRIFT**

(45) Veröffentlichungstag der Patentschrift:
06.09.89

(51) Int. Cl.⁴: **B 60 C 27/06**, B 60 C 27/12

(21) Anmeldenummer: 84112768.1

(22) Anmeldetag: 23.10.84

(54) Gleitschutzkette für Fahrzeugreifen.

(30) Priorität: 20.01.84 DE 3401971

(43) Veröffentlichungstag der Anmeldung:
14.08.85 Patentblatt 85/33

(45) Bekanntmachung des Hinweises auf die Patenterteilung:
06.09.89 Patentblatt 89/36

(84) Benannte Vertragsstaaten:
AT BE CH DE LI NL

(56) Entgegenhaltungen:
EP-A- 0 060 804
EP-A- 0 088 044
CH-A- 655 063
DE-A- 2 845 999
US-A- 2 976 902
US-A- 3 884 283

(73) Patentinhaber: Steirische Kettenfabriken
Pengg-Walenta KG, Theodor-Körner Strasse 59,
A-8021 Graz (AT)

(72) Erfinder: Jeindl, Ferdinand, Dipl.-Ing., Körblergasse 59,
A-8010 Graz (AT)

(74) Vertreter: Fehners, Klaus Friedrich, Dipl.-Ing.
Dipl.-Wirtsch.-Ing. et al, Patentanwälte Dipl.-Ing. A.
Wedde Dipl.-Ing. K. Empl Dipl.-Ing., Dipl.-Wirtsch.-Ing. K.
Fehners Schumannstrasse 2, D-8000 München 80 (DE)

ACTORUM AG

### Beschreibung

Die Erfindung betrifft eine Gleitschutzkette für Fahrzeugreifen mit einer in montiertem Zustand jeweils gegen die Innenseite und die Außenseite des Reifens zur Anlage kommenden inneren und äußeren Halterung für sich über die Lauffläche des Reifens erstreckende Laufketten, wobei sowohl die innere als auch die äußere Halterung öffen- bzw. verschließbar sind und die äußere Halterung zweiteilig ausgebildet ist, deren erstes Teil gemeinsam mit der inneren Halterung die Laufketten hält, und deren zweites Teil in Form eines ein Spannglied aufweisenden Schließstranges die äußere Halterung spannend verschließt.

Bei solchen beispielsweise aus der DE-A-2 845 999 oder US-A-2 976 902 bekannten Gleitschutzketten sind unabhängig von der Ausbildung der Verschlußvorrichtung an der inneren Halterung für die äußere Halterung eine oder auch zwei vollständig unabhängig voneinander wirkende und mit Federn als Spannglieder versehene Schließstränge vorgesehen, welche die offenen Enden der beispielsweise als Seitenkette oder Nylonseil ausgebildeten äußeren Halterung verbinden und insbesondere nach einigen Metern Fahrt unbedingt nochmals nachgespannt werden müssen, da erst nach mehrfacher Drehung des mit der Gleitschutzkette versehenen Reifens die Laufketten durch die von den Spanngliedern ausgeübte Zugkraft auch in den Bereich der Berührungsellipse des Reifens mit der Fahrbahn gelangen, wobei die durch das ursprüngliche Anziehen der Schließstränge in das jeweilige Spannglied eingebrachte Zugkraft nicht für ein nachspannfreies Bedienen ausreicht. Dies hat insbesondere seine Ursache darin, daß bei kräftemäßig zu stark dimensioniertem einzigen Spannglied die Bedienungsperson nicht die notwendige Kraft aufzuwenden in der Lage ist, andererseits nur dieses einzige Spannglied auf den Schließstrang wirkt.

Aufgabe der Erfindung ist es, eine Gleitschutzkette der eingangs genannten Art so auszubilden, daß ein nach Bewegen des Fahrzeuges erforderliches Nachspannen entfällt, sich vielmehr das Nachspannen durch die Wirkung des Spanngliedes selbständig einstellt, sobald das Fahrzeug voranbewegt wird, ohne daß an der äußeren Halterung mehr als ein Schließstrang angeordnet ist.

Diese Aufgabe wir dadurch gelöst, daß beide Enden des Schließstranges als freie Enden ausgebildet und durch die an den Enden des ersten Teiles vorgesehenen Umlenkteile gleitend hindurchgeführt sind, wobei die freien Enden jeweils um mehr als 90° umgelenkt und, sich überkreuzend, mit den Einhängegliedern in der äußeren Halterung eingehängt sind, wobei beide freie Enden jeweils ein Spannglied mit einem Spannweg größer als 100 mm aufweisen.

Die erfindungsgemäße Anordnung eines solchen zwei freie Enden aufweisenden Schließstranges, welche, sich kreuzweise überschneidend, in die äußere Halterung eingehängt werden, bietet den Vorteil, daß die Bedienungsperson weniger Kraft aufwenden muß, um die notwendige Verspannung in der Gleitschutzkette herzustellen, da nunmehr das jeweilige Spannglied gegenüber der bekannten Gleitschutzketten-Ausführung mit einem Spannglied je Schließstrang nur zur Hälfte angespannt werden muß, und sich die Spannkräfte der beiden Spannglieder addieren.

Diese Ausbildung des Schließstranges bietet den weiteren Vorteil, daß beim Aufziehen der Gleitschutzkette auf den Reifen durch die Längsverschiebbarkeit des Schließstranges nach beiden Seiten innerhalb der Umlenkteile eine einfachere Bedienung möglich ist. Darüber hinaus bietet diese Konstruktion auch fertigungstechnisch Vorteile.

Vorteilhaft sind die Umlenkteile als Ringe ausgebildet, wobei die Einhängeglieder des Schließstranges größer als der Durchmesser der Ringe dimensioniert sind, wodurch verhindert wird, daß der Schließstrang sich aus der äußeren Halterung befreien und damit die Gleitschutzkette unbrauchbar machen kann.

In Weiterbildung der Erfindung sind die Spannglieder unmittelbar benachbart zu den Einhängegliedern an den freien Enden des Schließstranges angeordnet, wobei die Spannglieder durch die Umlenkteile hindurchgleitend ausgebildet sein können, wodurch sich die Flexibilität des Spannstranges und damit das Aufziehen der Gleitschutzkette auf den Fahrzeugreifen erleichtert, da die äußere Halterung weiter geöffnet werden kann.

Erfindungsgemäß sind die Spannglieder als mindestens ein aus elastischem Material hergestellter geschlossener Ring ausgebildet, wobei dieser bzw. diese mittels eines Schlauchabschnittes bzw. einer Hülse zusammengefaßt ist bzw. sind, damit die Spannglieder durch die Umlenkteile hindurchgleiten können, bis die Einhängeglieder an den Umlenkteilen anschlagen.

Vorteilhaft weist der Schließstrang zwischen den Umlenkteilen und in der Mitte seiner Länge ein Sperrglied auf, welches größer dimensioniert ist, als der Durchmesser der Ringe an den Enden der äußeren Halterung. Dieses Sperrglied kann beispielsweise als Plättchen ausgebildet sein, auf welchem Kennzeichnungsdaten etc. eingeprägt sein können.

Vorteilhaft weisen die Einhängeglieder sich selbständig schließende Sicherungen auf, beispielsweise in Form von Karabinerhaken, so daß ein Aushaken der freien Enden des Schließstranges auf jeden Fall vermieden wird, insbesondere unter Fahreinwirkungen auf die Gleitschutzkette.

Weitere Vorteile der Erfindung ergeben sich aus den Merkmalen der übrigen Unteransprüche sowie den Einzelheiten der nachstehenden Beschreibung von in den beigefügten Zeichnungen dargestellter Ausführungsbeispiele.

Es zeigen:

Fig. 1 eine teilweise Seitenansicht auf einen mit einer Gleitschutzkette versehenen Fahrzeugreifen,

Fig. 2 die teilweise Unteransicht auf einen mit einer Gleitschutzkette versehenen Fahrzeugreifen mit Darstellung der Berührungsellipse,

Fig. 3 eine Seitenansicht eines Ausführungsbeispieles der Verschlußvorrichtung und

Fig. 4 eine Darstellung des Schließstranges.

Die in den Figuren dargestellte Gleitschutzkette 1 für Fahrzeugreifen besteht im wesentlichen aus gegen die Innenseite 2 und die Außenseite 3 des Reifens zur Anlage kommenden inneren und äußeren Halterung 4 bzw. 5 für sich über die Lauffläche des Reifens erstreckende Laufketten 6, wobei sowohl die innere als auch die äußere Halterung 4 bzw. 5 öffen- bzw. verschließbar ausgebildet ist.

Bei der in den Figuren dargestellten Gleitschutzkette ist die innere Halterung 4 als an einer Stelle offener, einteiliger und im wesentlichen kreisförmiger Federstahlbügel ausgebildet, welcher mittels eines Hakenverschlusses 8 verschließbar ist.

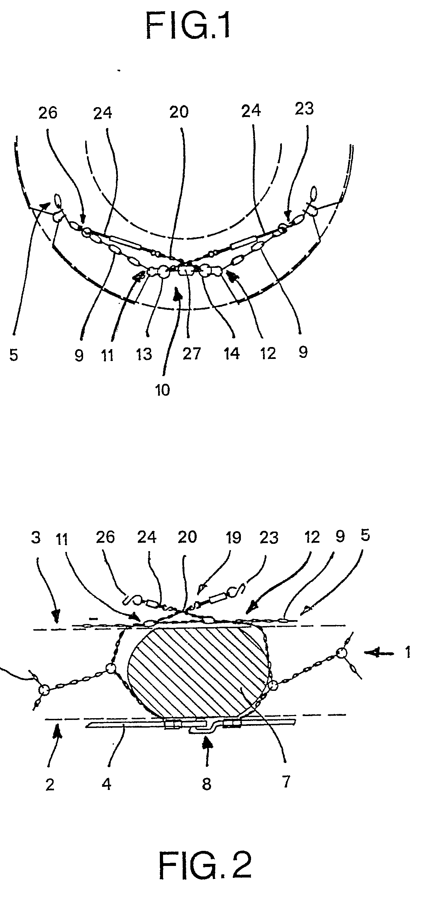

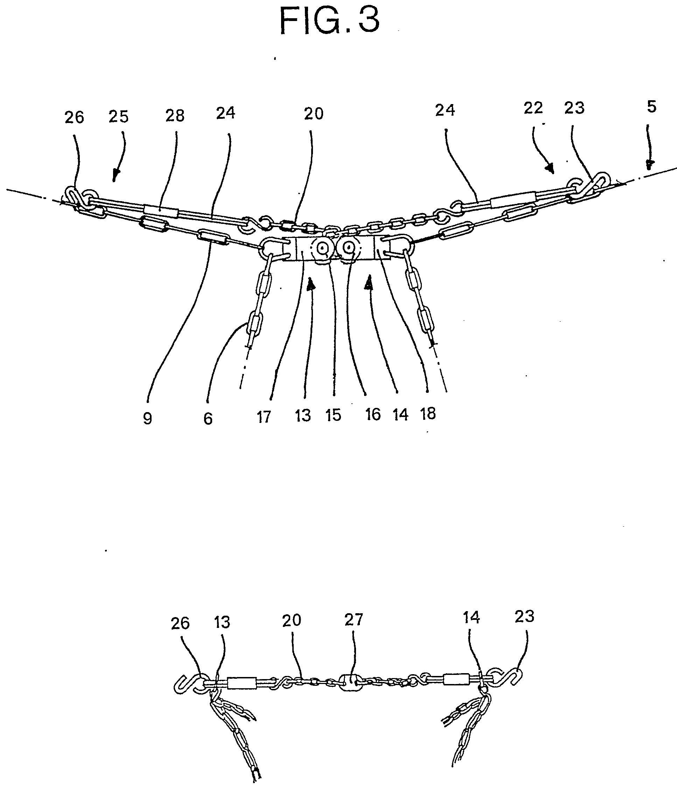

Die äußere Halterung 5 ist zweiteilig ausgebildet, wobei deren erstes Teil 9 als mit einer Öffnung 10 versehene Seitenkette ausgebildet ist, deren Enden 11 bzw. 12 Umlenkteile 13 bzw. 14 sind, welche beispielsweise als Ringe ausgebildet sein können. Siehe hierzu Fig. 1. Eine Ausbildung der Umlenkteile 13 bzw. 14 als Rollen 15 bzw. 16 ist in Fig. 3 dargestellt, wobei die Rollen 15 bzw. 16 in besonders ausgebildeten Lagern 17 bzw. 18 gehalten sind.

Das zweite Teil 19 der äußeren Halterung 5 ist als Schließstrang 20 ausgebildet, welcher die äußere Halterung 5 insgesamt spannend verschließt. Hierzu ist, wie insbesondere in Fig. 3 dargestellt, der Schließstrang 20 gleitend durch die als Rollen 15 bzw. 16 ausgebildeten Umlenkteile 13 bzw. 14 hindurchgeführt und kann vorteilhaft, wie in Fig. 4 dargestellt, in der Mitte seiner Länge ein Sperrglied 27 aufweisen, welches größer dimensioniert ist, als der Durchmesser der als Ringe bzw. Rollen etc. ausgebildeten Umlenkteile 13 bzw. 14. Hierdurch wird erreicht, daß der in den Umlenkteilen 13 bzw. 14 frei gleitende Schließstrang 20 nicht aus diesen Umlenkteilen herausfallen bzw. diesen entgleiten kann, so daß dadurch die Gleitschutzkette unbrauchbar werden würde.

Der Schließstrang 20 wird dann von den Umlenkteilen 13 bzw. 14 um mehr als 90° umgelenkt und mit an seinen freien Enden 21 bzw. 22 angeordneten und als Haken ausgebildeten Einhängegliedern 23 bzw. 26 in der als Seitenkette ausgebildeten äußeren Halterung 5 eingehängt, wobei unmittelbar benachbart zu den Einhängegliedern 23 bzw. 26 Spannglieder 24 bzw. 28 zwischengeschaltet sind.

Auch die Einhängeglieder 23 bzw. 26 weisen eine Größe auf, welche so gewählt ist, daß die Einhängeglieder nicht durch die Umlenkteile 13 bzw. 14, wie in Fig. 4 dargestellt, hindurchgleiten können.

Die Spannglieder 24 sind dagegen so dimensioniert, daß sie gerade noch durch die Umlenkteile 13 bzw. 14 hindurchgeführt werden können, um eine möglichst große Verlängerung der äußeren Halterung 5 der Gleitschutzkette 1 zu erreichen. Hierzu werden die vorteilhaft aus elastischen Ringen, wie in den Figuren dargestellt aus jeweils zwei Ringen, hergestellten Spannglieder mit einem Schlauchabschnitt bzw. einer Hülse 28 zusammengefaßt, welche den Innenabmessungen der Umlenkteile 13 bzw. 14 entsprechen.

Nicht dargestellt in den Figuren ist die Ausbildung der Einhängeglieder 23 bzw. 26 sowie der Umlenkteile 13 bzw. 14 beispielsweise als Karabinerhaken, so daß diese Teile geöffnet werden können.

Bevorzugt ist der Schließstrom als kurzgliedrige Kette ausgebildet, so daß dessen Gleitfähigkeit gefördert wird, diese Eigenschaft kann auch durch die Ausbildung des Schließstranges als Seil vorteilhaft erreicht werden. Ebenfalls nicht in den Figuren dargestellt ist, daß die äußere Halterung nur zum Teil als Seitenkette, zum anderen Teil als ein- bzw. mehrteiliger Bügel ausgebildet sein kann.

Die Bedienung der Gleitschutzkette wird dadurch erleichtert, wenn die Spannglieder 24 und ggf. auch die Einhängeglieder 23 bzw. 26 mit unterschiedlichen Farben gekennzeichnet sind und an der äußeren Halterung 5, jeweils rechts bzw. links von der Öffnungsstelle 10, korrespondierende Farbkennzeichnungen angeordnet sind, so daß der Bedienungsperson Hinweise gegeben werden, auf welcher Seite die freien Enden des Schließstranges 20 eingehängt werden müssen.

**Patentansprüche**

1. Gleitschutzkette für Fahrzeugreifen mit einer in montiertem Zustand jeweils gegen die Innenseite und die Außenseite des Reifens zur Anlage kommenden inneren und äußeren Halterung (4 bzw. 5) für sich über die Lauffläche des Reifens erstreckende Laufkette (6), wobei sowohl die innere als auch die äußere Halterung öffen- bzw. verschließbar und die äußere Halterung zweiteilig ausgebildet ist, deren erstes Teil (9) gemeinsam mit der inneren Halterung die Laufketten hält, und deren zweites Teil in Form eines ein elastisches Spannglied (24) aufweisenden Schließstranges (20) die äußere Halterung spannend verschließt, dadurch gekennzeichnet, daß beide Enden des Schließstranges (20) als freie Enden (22 bzw. 25) ausgebildet und durch an den Enden (11 bzw. 12) des ersten Teiles (9) vorgesehene Umlenkteile (13 bzw. 14) gleitend hindurchgeführt sind, wobei die freien Enden (22 bzw. 25) jeweils um mehr als 90° umgelenkt und, sich überkreuzend, mit den Einhängegliedern (23 bzw. 26) in der äußeren Halterung (5) eingehängt sind, wobei die freien Enden (22 bzw. 25) jeweils ein Spannglied (24) mit einem Spannweg größer 100 mm aufweisen.

2. Gleitschutzkette nach Anspruch 1, dadurch gekennzeichnet, daß die Umlenkteile (13 bzw. 14) als Ringe ausgebildet sind.

3. Gleitschutzkette nach Anspruch 2, dadurch gekennzeichnet, daß die Einhängeglieder (23 bzw. 26) des Schließstranges (20) größer als der Durchmesser der Ringe (13 bzw. 14) dimensioniert sind.

4. Gleitschutzkette nach Anspruch 2, dadurch gekennzeichnet, daß die Spannglieder (24) unmittelbar benachbart zu den Einhängegliedern (23 bzw. 26) an den freien Enden des Schließstranges (20) angeordnet sind.

5. Gleitschutzkette nach Anspruch 4, dadurch gekennzeichnet, daß die Spannglieder (24) durch die Umlenkteile (13 bzw. 14) hindurchgleitbar ausgebildet sind.

6. Gleitschutzkette nach Anspruch 5, dadurch gekennzeichnet, daß die Spannglieder (24) als mindestens ein aus elastischem Material hergestellter geschlossener Ring ausgebildet sind.

7. Gleitschutzkette nach Anspruch 6, dadurch gekennzeichnet, daß der bzw. die das einzelne Spannglied (24) bildende(n) Ring(e) mittels eines Schlauchabschnittes bzw. einer Hülse (28) zusammengefaßt ist/sind.

8. Gleitschutzkette nach Anspruch 1, dadurch gekennzeichnet, daß der Schließstrang (20) zwischen den Umlenkteilen (13 bzw. 14) und in der Mitte seiner Länge ein Sperrglied (27) aufweist, welches größer dimensioniert ist, als der Durchmesser der Umlenkteile (13 bzw. 14) an den Enden (11 bzw. 12) der äußeren Halterung (5).

9. Gleitschutzkette nach Anspruch 1, dadurch gekennzeichnet, daß die Einhängeglieder (23 bzw. 26) sich selbständig schließende Sicherungen aufweisen.

10. Gleitschutzkette nach Anspruch 1, dadurch gekennzeichnet, daß die Umlenkteile (13 bzw. 14) als die Umlenkung des Schließstranges (20) fördernde Gleitstücke ausgebildet sind.

11. Gleitschutzkette nach Anspruch 1, dadurch gekennzeichnet, daß die Umlenkteile (13 bzw. 14) als Gleitrollen (15 bzw. 16) ausgebildet sind.

12. Gleitschutzkette nach Anspruch 1, dadurch gekennzeichnet, daß die Umlenkteile (13 bzw. 14) öffenbar ausgebildet sind.

13. Gleitschutzkette nach Anspruch 1, dadurch gekennzeichnet, daß der Schließstrang (20) als Kette ausgebildet ist.

14. Gleitschutzkette nach Anspruch 1, dadurch gekennzeichnet, daß der Schließstrang (20) als kurzgliedrige Kette ausgebildet ist.

15. Gleitschutzkette nach Anspruch 1, dadurch gekennzeichnet, daß der Schließstrang (20) als Seil ausgebildet ist.

16. Gleitschutzkette nach Anspruch 1, dadurch gekennzeichnet, daß der erste Teil (9) der äußeren Halterung (5) als Seitenkette ausgebildet ist.

17. Gleitschutzkette nach Anspruch 1, dadurch gekennzeichnet, daß der erste Teil (9) der äußeren Halterung (5) zum einen Teil als Kette und zum anderen Teil als steifer Bügel ausgebildet ist.

18. Gleitschutzkette nach Anspruch 1, dadurch gekennzeichnet, daß der erste Teil (9) der äußeren Halterung (5) als mehrteiliger Bügel ausgebildet ist.

19. Gleitschutzkette nach Anspruch 1, dadurch gekennzeichnet, daß die Einhängeglieder (23 bzw. 26) des Schließstranges (20) mit unterschiedlichen Farbkennzeichnungen versehen sind, und daß zu beiden Seiten der Umlenkteile (13 bzw. 14) am ersten Teil (9) der äußeren Halterung (5) jeweils korrespondierende Farbkennzeichnungen angeordnet sind.

**Claims**

1. Non-skid chain for vehicle tyres, comprising each inner and outer supports (4 and/or 5) for chains (6) covering the cap of the tyre, which supports when being mounted contact the inner wall and the outer wall of the tyre, in which connection both the inner support and the outer support can be opened and closed, respectively, and the outer support is designed in two pieces, whose first piece (9) together with the inner support carries the chains and whose second piece resiliently closes the outer support in the form of a locking ring (20) comprising an elastic tensioning member (24), characterized in that the two ends of the locking ring (20) are adapted as free ends (22 and/or 25) and are slidingly passed through deflection members (13 and/or 14) provided at the ends (11 and/or 12) of the first piece (9), the free ends (22 and/or 25) each being deflected by more than 90° and, intersecting, being suspended with the suspension members (23 and/or 26) in the outer support (5), in which connection the free ends (22 and/or 25) each comprise a tensioning member (24) with a tensioning path of more than 100 mm.

2. Non-skid chain according to claim 1, characterized in that the deflection members (13 and/or 14) are adapted as rings.

3. Non-skid chain according to claim 2, characterized in that the suspension members (23 and/or 26) of the locking ring (20) are dimensioned larger than the diameter of the rings (13 and/or 14).

4. Non-skid chain according to claim 2, characterized in that the tensioning members (24) are arranged directly adjacent to the suspension members (23 and/or 26) at the free ends of the locking ring (20).

5. Non-skid chain according to claim 4, characterized in that the tensioning members (24) are designed in a manner being passable through the deflection members (13 and/or 14).

6. Non-skid chain according to claim 5, characterized in that the tensioning members (24) are designed at least as one closed ring made of some elastic material.

7. Non-skid chain according to claim 6, characterized in that the ring(s) forming the single tensioning member (24) is (are) combined by means of a tube section or a sleeve (28).

8. Non-skid chain according to claim 1, characterized in that the closing ring (20) comprises a blocking member (27) between the deflection members (13 and/or 14) and in the middle of its length, which blocking member (27) is dimensioned larger than the diameter of the deflection members (13 and/or 14) at the ends (11 and/or 12) of the outer support (5).

9. Non-skid chain according to claim 1, characterized in that the suspension members (23 and/or 26) comprise automatically closing safety devices.

10. Non-skid chain according to claim 1, characterized in that the deflection members (13 and/or 14) are designed as sliders supporting the deflection of the closing ring (20).

11. Non-skid chain according to claim 1, characterized in that the deflection members (13 and/or 14) are designed as sliding rollers (15 and/or 16).

12. Non-skid chain according to claim 1, characterized in that the deflection members (13 and/or 14) are designed to be opened.

13. Non-skid chain according to claim 1, characterized in that the closing ring (20) is designed as chain.

14. Non-skid chain according to claim 1, characterized in that the closing ring (20) is designed as short-linked chain.

15. Non-skid chain according to claim 1, characterized in that the closing ring (20) is designed as rope.

16. Non-skid chain according to claim 1, characterized in that the first portion (9) of the outer support (5) is designed as lateral chain.

17. Non-skid chain according to claim 1, characterized in that the first portion (9) of the outer support (5) is designed in part as chain and in part as rigid yoke.

18. Non-skid chain according to claim 1, characterized in that the first portion (9) of the outer support (5) is designed as multi-piece bow.

19. Non-skid chain according to claim 1, characterized in that the suspension members (23 and/or 26) of the closing ring (20) are provided with different color markings and that on both sides of the deflection members (13 and/or 14) each corresponding color markings are provided at the first portion (9) of the outer support (5).

**Revendications**

1. Chaîne antidérapante pour pneumatiques de véhicule équipée d'une fixation interne et d'une fixation externe (4 à 5) qui viennent en appui contre la face interne et la face externe du pneumatique, à l'état installé, et qui sont destinées à des chaînes de roulement (6) s'étendant sur la surface de roulement du pneumatique, aussi bien la fixation interne que la fixation externe pouvant être ouvertes ou fermées et la fixation externe étant réalisée en deux parties, dont une première partie (9) maintient les chaînes de roulement en commun avec, la fixation interne et dont la seconde partie, sous forme d'un trait de fermeture (20) présentant un élément tendeur élastique (24), ferme la fixation externe en la tendant, caractérisée en ce que les deux extrémités du trait de fermeture (20) sont réalisées sous la forme d'extrémités libres (22 et 25) et sont passées en glissant au travers d'éléments de déviation (13 et 14) prévus aux extrémités (11 et 12) de la première partie (9), les extrémités libres (22 et 25) étant chacune déviées de plus de 90° et, se croisant, étant accrochées à la fixation externe (5) au moyen d'éléments d'accrochage (23 et 26), les extrémités libres (22 et 25) présentant chacune une élément tendeur (24) ayant un déplacement sous tension de plus de 100 mm.

2. Chaîne antidérapante suivant la revendication 1, caractérisée en ce que les éléments de déviation (13 et 14) sont réalisés sous la forme d'anneaux.

3. Chaîne antidérapante suivant la revendication 2, caractérisée en ce que les éléments d'accrochage (23 et 26) du trait de fermeture (20) sont de plus grande dimension que le diamètre des anneaux (13 et 14).

4. Chaîne antidérapante suivant la revendication 2, caractérisée en ce que les éléments tendeurs (24) sont agencés sur les extrémités libres du trait de fermeture (20), directement à proximité des éléments d'accrochage (23 et 26).

5. Chaîne antidérapante suivant la revendication 4, caractérisée en ce que les éléments tendeurs (24) sont réalisés pour pouvoir coulisser au travers des éléments de déviation (13 et 14).

6. Chaîne antidérapante suivant la revendication 5, caractérisée en ce que les éléments tendeurs (24) sont réalisés sous la forme d'au moins un anneau fermé fabriqué en un matériau élastique.

7. Chaîne antidérapante suivant la revendication 6, caractérisée en ce que le ou les anneaux formant l'élément tendeur (24) individuel est ou sont réunis au moyen d'une section de gaine ou d'un manchon (28).

8. Chaîne antidérapante suivant la revendication 1, caractérisée en ce que le trait de fermeture (20) présente entre les éléments de déviation (13 et 14) et au milieu de sa longueur, un élément d'arrêt (27) qui est de plus grande dimension que le diamètre des éléments de déviation (13 et 14) des extrémités (11 et 12) de la fixation externe (5).

9. Chaîne antidérapante suivant la revendication 1, caractérisée en ce que les éléments d'accrochage (23 et 26) présentent des sécurités qui se ferment de manière automatique.

10. Chaîne antidérapante suivant la revendication 1, caractérisée en ce que les éléments de déviation (13 et 14) sont réalisés sous la forme de pièces de glissement favorisant la déviation du trait de fermeture (20).

11. Chaîne antidérapante suivant la revendication 1, caractérisée en ce que les éléments de déviation (13 et 14) sont réalisés sous la forme de galets (15 et 16).

12. Chaîne antidérapante suivant la revendication 1, caractérisée en ce que les éléments de déviation (13 et 14) sont réalisés de façon à pouvoir être ouverts.

13. Chaîne antidérapante suivant la revendication 1, caractérisée en ce que le trait de fermeture (20) est réalisé sous la forme d'une chaîne.

14. Chaîne antidérapante suivant la revendication 1, caractérisée en ce que le trait de fermeture (20) est réalisé sous la forme d'une chaîne à maillons courts.

15. Chaîne antidérapante suivant la revendication 1, caractérisée en ce que le trait de fermeture (20) est réalisé sous la forme d'un câble.

16. Chaîne antidérapante suivant la revendication 1, caractérisée en ce que la première partie (9) de la fixation externe (5) est réalisée sous la forme d'une chaîne latérale.

17. Chaîne antidérapante suivant la revendication 1, caractérisée en ce que la première partie (9) de la fixation externe (5) est réalisée pour une part sous la forme d'une chaîne et sous la forme d'un arceau rigide pour une autre part.

18. Chaîne antidérapante suivant la revendication 1, caractérisée en ce que la première partie (9) de la fixation externe (5) est réalisée sous la forme d'un arceau en plusieurs pièces.

19. Chaîne antidérapante suivant la revendication 1, caractérisée en ce que les éléments d'accrochage (23 et 26) du trait de fermeture (20) sont pourvus de marques de couleur différentes et en ce que des marques de couleur correspondantes sont disposées respectivement des deux côtés des éléments de déviation (13 et 14) de la première partie (9) de la fixation externe (5).

# FIG.1

# FIG.2

# FIG. 3

# FIG. 4